# EUROPEAN PATENT APPLICATION

(11) **EP 0 616 468 A2**
(43) Date of publication of application: **21.09.1994**
(21) Application number: 94104233.5
(22) Date of filing: 17.03.1994
(51) Int. Cl.: H04N 7/00, H04N 5/44, H04N 5/92, H04N 9/83

(54) **Video signal processing system**

(30) Priority: 18.03.1993 JP 84061/93
(71) Applicant: VICTOR COMPANY OF JAPAN, LIMITED, Yokohama-Shi Kanagawa-Ken 221 (JP)
(72) Inventor: Ichinoi, Yutaka, Yokohama-shi, Kanagawa-ken (JP); Yamada, Hiroshi, Tokyo (JP)
(74) Representative: Gladwin, Philip

(57) **Abstract**

A video signal processing system for outputting an EDTV signal from which an accompanying auxiliary signal is removed when the auxiliary signal of the inputted EDTV signal hh' is in the base-band frequency. The system includes an auxiliary signal period detection circuit (6-12) for outputting a detection signal "g" by detecting auxiliary signal periods dd11 and dd22 corresponding to the auxiliary signals dd1' and dd2' in the base band frequency and a mute circuit 4 for muting the EDTV signal in the auxiliary signal periods dd11 and dd22 in response to the auxiliary signal detection signal "g".

## Description

### BACKGROUND OF THE INVENTION

### Field of the Invention

The present invention relates to a video signal processing system.

### Description of the Prior Art

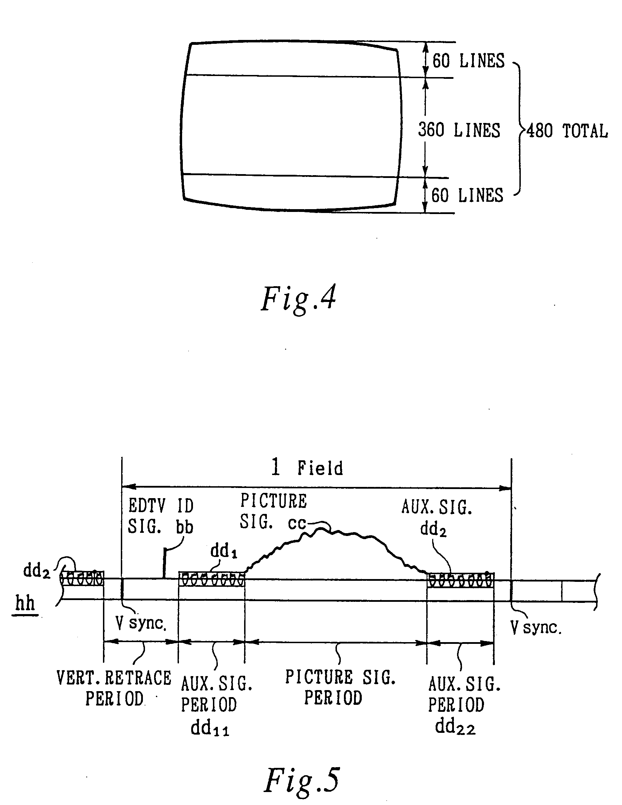

Prior arts will be described with reference to Fig. 4 which is useful to explain an image of a letter box system and Fig. 5 which shows a signal format for the EDTV (Extended Definition Television) system.

A transmission system for transmitting a high quality image having a display screen aspect ratio of 16 : 9, which is compatible with a conventional "television receiver" (hereinafter referred to as "TV receiver") having a screen aspect ratio of 4 : 3, has been studied. One of such transmission systems is the so-called letter box system in which, when an image is displayed on a screen of a conventional TV receiver, black portions are displayed on an upper region and a lower region of the displayed picture and the image information is displayed on a vertical center with an aspect ratio of 16 : 9, as shown in Fig. 5 and, when it is displayed on a screen of an EDTV receiver which is capable of reproducing an image having an aspect ratio of 16 : 9 filling the same aspect ratio screen, two auxiliary signals dd1 and dd2 corresponding to two vertical high frequency components or two horizontal high frequency components or a vertical high frequency component and a horizontal high frequency component are inserted into the black portions of the image. In Fig. 5, cc indicates a picture signal of image information. For the auxiliary signals dd1 and dd2. modulation scheme have been considered to be so-called the VSB-modulation (vestigial side band modulation) obtained by restricting its carrier or digital encoding. These signals are illustrated in Fig. 5 and will be referred to as the EDTV signal hereinafter. In order to identify such EDTV signal, an EDTV identification signal bb is inserted into a predetermined scanning line within a vertical blanking period as shown in Fig. 5. And, when the auxiliary signals dd1 and dd2 are absent, a constant black level is present in the auxiliary signal periods dd11 and dd22.

An example of such EDTV signal is the "PAL plus" system which is under consideration in Europe.

When such EDTV signal is to be recorded and reproduced in a conventional magnetic video signal recording and reproducing apparatus (referred to as "VTR" hereinafter), it pauses a problem that the auxiliary signals dd1 and dd2 of the EDTV signal can not be decoded by a decoder for obtaining high quality image due to the following problems (1) to (3) for reasons that in such a conventional VTR, the input EDTV signal is simply regarded as a normal TV signal thus is not properly processed therein.
(1) The auxiliary signals dd1 and dd2 are not always having line correlation and thus a portion of the auxiliary signals dd1 and dd2 having no line correlation is removed by a comb filter provided for separating a luminance (Y) signal and a color signal. Therefore, a degradation of the auxiliary signals dd1 and dd2 at an output of the comb filter may occur.
(2) When the auxiliary signals dd1 and dd2 are VSB (Vestigial Side Band) modulated signals, it is necessary, in reproducing operation, to reproduce a carrier which tracks a jitter frequency caused and contained in a video signal reproduced from the conventional VTR. Therefore, it is impossible to accurately reproduce the VSB modulated signal without using a complicated time base correction. Further, since VSB modulated signal usually requires a wide band transmission system capable of transmitting a high frequency carrier, it is impossible to accurately record and reproduce it unless a wide band VTR is used.
(3) When the auxiliary signals dd1 and dd2 are digitally encoded signals, an error correction code attaching circuit and an error correction circuit are necessary in recording and reproducing such signals. Further, since it is necessary to reproduce a clock signal for decoding purpose, such VTR must become complicated.

In order to solve the problems (1) to (3), Japanese Patent Application 4-30146/1992 titled "Magnetic Video Signal Recording Apparatus" and assigned to the same assignee of the present application proposes a VTR for recording a video signal containing a time-division multiplexed picture signal representing an image information and an auxiliary signal related to the picture signal, which comprises a first filter for separating a luminance signal from the video signal, a demodulator for converting the auxiliary signal into a base-band frequency without passing the first filter, a luminance signal recording circuit which FM-modulates an output of the demodulator when at least the auxiliary signal is present, otherwise FM modulates the luminance signal, second filter for separating a color signal from the video signal and a color signal recording circuit including a conversion of the color signal into a frequency range lower than that of the luminance signal, whereby the output of the luminance signal recording circuit and the output of the color signal recording circuit are frequency-multiplexed and recorded on the tape.

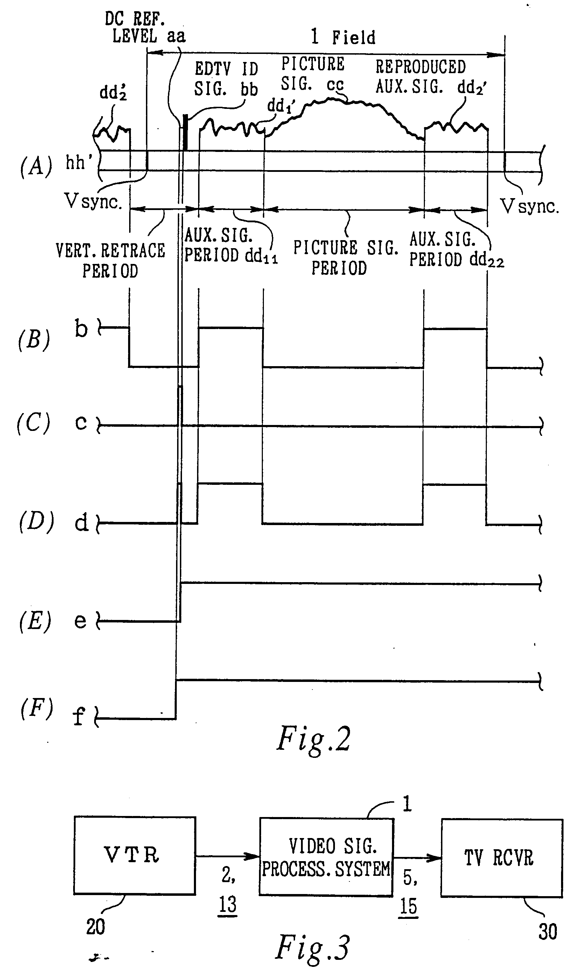

When a video signal recorded on a recording medium by the above proposed VTR, is reproduced by a conventional VTR of helical scan type having a conventional reproducing circuit which is not complementary to the recording circuit of the proposed VTR, the reproduced video signal (reproduced as not a correct EDTV signal but a normal video signal), is displayable on a screen of a conventional TV receiver having a screen aspect ratio of 4 : 3 as such that the EDTV signal hh' shown in Fig. 2(A) presents its base band auxiliary signals as black portions corresponding to the upper and lower portions of the displayed picture.

However, since the base band auxiliary signal in the reproduced video signal has a large amplitude centered at a DC reference level which is higher than the level of the normally modulated auxiliary signals dd1 and dd2 centered at the black level. the luminance of the upper and lower portions of the displayed image, which correspond to the base band auxiliary signal do not become complete black but relatively bright gray and too conspicuous, thus the center portion of the image to be watched is not highlighted but relatively dim.

### SUMMARY OF THE INVENTION

Accordingly, it is a general object of the present invention to solve the aforementioned problems.

Another and specific object of the invention is to provide a video signal processing system for processing various types of video signals including an EDTV signal containing a picture signal indicative of image information and an auxiliary signal related to the picture signal, the auxiliary signal being time-division multiplexed with the picture signal, the system comprises an auxiliary signal period detection means for outputting a detection signal by detecting a period of the auxiliary signal residing in a base-band frequency when the EDTV signal inputted to the system contains the auxiliary signal being in the base-band frequency and muting means for muting the EDTV signal in the period of the auxiliary signal in the base-band frequency in response to the detection signal.

### BRIEF DESCRIPTION OF THE DRAWINGS

Fig. 1 is a block diagram of an embodiment of a video signal processing system according to the present invention;
Fig. 2 is a waveform of EDTV signal and related time charts showing an operation of the video signal processing system;
Fig. 3 is a schematic diagram showing an application of the video signal processing system according to the present invention;
Fig. 4 is a figure explaining a letter box system; and
Fig. 5 is a figure explaining an EDTV signal.

### DETAILED DESCRIPTION OF THE PREFERRED EMBODIMENTS

### [Embodiment]

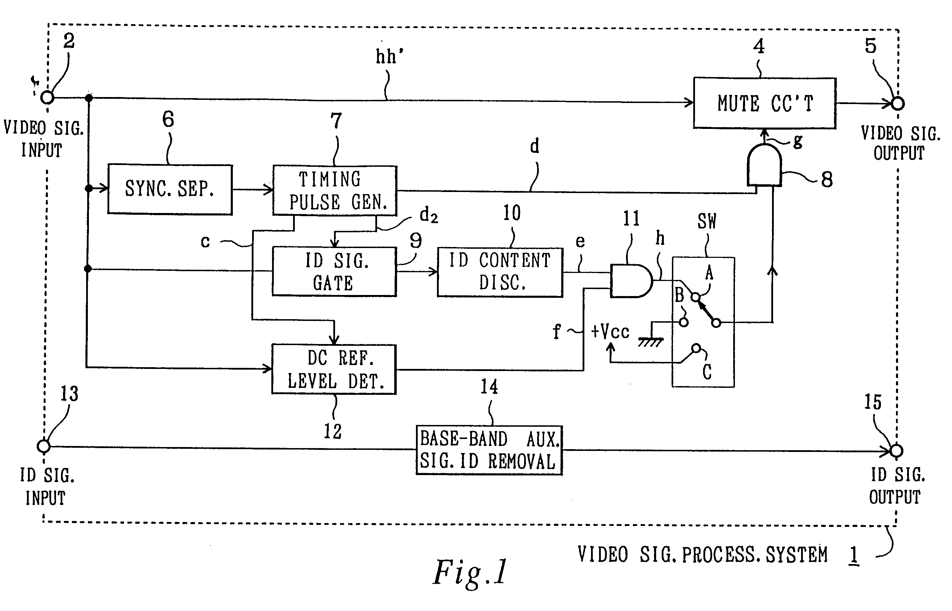

A video signal processing system according to the present invention will be described with reference to Figs.1 to 3. Fig. 1 is a block diagram of an embodiment of a video signal processing system according to the present invention, Fig. 2 is a waveform of EDTV signal and a related time charts showing an operation of the video signal processing system, and Fig. 3 is a schematic diagram showing an application of the video signal processing system according to the present invention.

The video signal processing system according to the present invention is capable of outputting the EDTV signal of which a base band auxiliary signal (unmodulated or unencoded auxiliary signal) is substantially removed when an EDTV signal with auxiliary signal in the base band frequency is inputted thereto, thereby disturbance on the displayed picture on a screen of a connected conventional TV receiver due to the auxiliary signal is prevented from appearing.

As shown in Figs. 1 and 2, the video signal processing system 1 according to the present invention processes a video signal including a picture signal indicative of an image information and an EDTV signal hh time-division multiplexed with auxiliary signals dd1 and dd2 related to the picture signal cc and an identification signal bb.

A video signal processing system 1 comprises an auxiliary signal period detection circuit for outputting a detection signal "g" obtained by detecting auxiliary signal periods dd11 and dd22 of the base band auxiliary signals dd1' and dd2' which are obtained by converting frequencies of the auxiliary signals dd1 and dd2 into the base band frequency when the EDTV signal hh' including the base band auxiliary signals dd1' and dd2' are inputted, and a mute circuit 4 for substantially muting the EDTV signal hh' including the base band auxiliary signals ddl' and dd2' during the auxiliary signal periods dd11 and dd22 on the basis of the auxiliary signal detection signal "g".

In Fig. 1, the video signal processing system 1 is constituted with the mute circuit 4, a synchronizing signal separating circuit 6, a timing pulse generator circuit 7, AND circuits 8 and 11, an identification signal (hereinafter referred to as "ID") gate circuit 9, an ID content identifying circuit 10, a DC reference level detector circuit 12, a base band auxiliary signal ID removing circuit 14 and a switch SW. Reference numerals 2 and 5 denote a video signal input terminal and a video signal output terminal respectively, and 13 and 15 denote base band auxiliary signal ID input and output terminals respectively.

The auxiliary signal period detection circuit is constituted with the synchronizing signal separating circuit 6, the timing pulse generator circuit 7, the AND circuits 8 and 11, the identification signal gate circuit 9, the identification signal content discriminating circuit 10, the DC reference level detection circuit 12, the base band auxiliary signal ID removing circuit 14 and the switch SW.

An operation of the video signal processing system 1 will be described. A luminance signal obtained by separating it from a color signal in frequency by passing a composite video signal through a band pass filter which is not shown or a luminance signal of a group of color and luminance signals (so-called the Y/C separated signals), one of which may be a part of the EDTV signal hh', is supplied to a video signal input terminal 2. In case that the EDTV signal hh' in Fig. 2(A) is supplied to the video signal input terminal 2, this input signal is supplied to the mute circuit 4, the synchronizing signal separating circuit 6, the identification signal gate circuit 9 and the DC reference level detection circuit 12.

The synchronizing signal separating circuit 6 separates a horizontal and vertical synchronizing signals from the EDTV signal hh' and supplies them to the timing pulse generator circuit 7.

The timing pulse generator circuit 7 produces, on the basis of the horizontal and vertical synchronizing signals from the synchronizing signal separating circuit 6, a pulse "b" (Fig. 2(B)) which is in "H" level only during the auxiliary signal periods dd11 and dd22 where the base band auxiliary signals dd1' and dd2' are present in a period of 1 field of the EDTV signal hh', and produces a pulse "c" (Fig. 2(C)) which is in "H" level only during a period in which a DC reference level aa is present in a period of 1 field of the EDTV signal hh', and produces a pulse dl as a logical sum of the pulses "b" and "c". Further, it outputs to one of inputs of the AND circuit 8a, a pulse "d" (Fig. 2(D)) which is a logical product of the pulse dl and a pulse being in "H" level in a period other than a horizontal retrace period. The pulse "d" indicates a mute period for muting the EDTV signal hh'. At the same timing as this pulse "d", the timing pulse generator circuit 7 produces a pulse d2 which is in "H" level only for a period in which the identification signal bb is present n 1 field of the EDTV signal hh' and supplies it to the identification signal gate circuit 9 and supplies the pulse "c" to the DC reference level detection circuit 12.

The identification signal gate circuit 9 extracts, in response to the pulse d2 supplied from the timing pulse generator circuit 7, the identification signal bb of the EDTV signal hh' supplied from the video signal input terminar 2, and supplies it to the identification signal content discrimination circuit 10.

The identification signal content discrimination circuit 10 identifies an information content of the identification signal bb supplied from the identification signal gate circuit 9 and supplies a pulse "e" (Fig. 2(E)) which becomes in "H" level when it identifies a presence of the information related to the EDTV signal, to one of inputs of the AND circuit 11.

The DC reference level detection circuit 12 makes a comparator (not shown) operable for a period in which the pulse "c" from the timing pulse generator circuit 7 is in "H" level and supplies a pulse "f" (Fig. 2(F)) to the other input of the AND circuit 11 when it detects a presence of the DC reference level aa of the EDTV signal hh' from the video signal input terminal 2 which is higher than a predetermined level (for example, the DC reference level).

The AND circuit 11 supplies a pulse "h" which is a logical product of the pulse "e" from the identification signal content discrimination circuit 10 and the pulse "f" from the DC reference level detection circuit 12, to a contact A of the switch SW.

The switch SW is a manual switch operable externally and includes three contacts A, B and C and a movable contact. The contact A is supplied with the pulse "h" from the AND circuit 11, the contact B is continuously grounded ("L" level) and the contact C is continuously supplied with a voltage Vcc ("H" level).
(1) Case where the movable contact is switched- to the contact A.
   The pulse "h" from the AND circuit 11 is supplied to the other input of the AND circuit 8. As a result, the AND circuit 8 can supply the detection signal "g" which is the logical product of the pulse d1 from the timing pulse generator circuit 7 and the pulse "h" from the AND circuit 11, to the mute circuit 4 as a mute control signal. The mute circuit 4 mutes the input video signal during a time in which the detection signal "g" is in "H" level and blocks the input video signal from outputting in response to the detection signal "g". Thus. the mute circuit 4 supplies the video signal output terminal 5 with the EDTV signal hh' having the auxiliary signal periods dd11 and dd22 being muted.
(2) Case where the movable contact is switched to the contact B
   A potential of "L" level is outputted to the other input terminal of the AND circuit 8. As a result, the output of the AD circuit 8 is kept at a "L" level, so that can not supply the detection signal "g" to the mute circuit 4 as a mute control signal. Therefore, the mute circuit 4 does not perform a mute operation for a period in which the detection signal "g" is in "L" level. Thus, the mute circuit 4 supplies the EDTV signal hh' supplied thereto to the video signal output terminal 5 as is.
(3) Case where the movable contact is switched to the contact C
   A potential of "H" level is supplied to the other input terminal of the AND circuit 8. As a result, the AND circuit 8 supplies the detection signal "g" which is the logical product of the "H" level from the switch SW and the pulse dl from the timing pulse generator circuit 7, to the mute circuit 4 as a mute control signal. The mute circuit 4 mutes the input video signal for a period in which the detection signal "g" is in "H" level and blocks the output signal to the video signal output terminal 5. Accordingly, the mute circuit 4 supplies the EDTV signal hh' being muted in the auxiliary signal periods dd11 and dd22. to the video signal output terminal 5.

In either the case (1) in which the movable contact is switched to the contact A or the case (3) in which the movable contact is switched to the contact C, the EDTV signal being muted in the auxiliary signal periods dd11 and dd22 of the EDTV signal hh' can be supplied to the video signal output terminal 5. Therefore, to obtain the same function, it is possible to substitute the switch SW having the three fixed contacts A, B and C with a switch SW having two fixed contacts B and C, by doing so, the identification signal gate circuit 9, the identification signal content discrimination circuit 10, the AND circuit 11 and the DC reference level detection circuit 12 can be omitted as a modifieation of the video signal processing system 1.

In case that a VTR20 (Fig. 3) records the auxiliary signal of the EDTV signal by converting its auxiliary signal into a base band frequency, and reproduces the recorded signal with an ID signal (the ID) for indicating the auxiliary signal being in the base band frequency and supplies the ID to a predetermined pin of a multi-pin connector, it is also necessary to remove the ID.

In this case, an output side of the predetermined pin of the multi-pin connector whose input side is connected to an output of the VTR20 with a signal cable, is connected to the base band auxiliary signal ID input terminal 13. As a result, the ID from the VTR 20 is supplied to the base band auxiliary signal ID input terminal 13 through the predetermined pin.

The base band auxiliary signal ID removing circuit 14 supplies a signal of which the ID supplied to the base band auxiliary signal ID input terminal 13 is removed, to a TV receiver 30 (Fig. 3) through the terminal 15.

For the ID which is a low level square wave signal superimposed with a DC signal indicative of another identification content, the ID removing circuit 14 is provided with a low-pass filter (not shown) having a cut-off frequency low enough to suppress an AC component of the ID, or a comparator (not shown) which outputs the DC signal by comparing an intermediate level of the inputted ID, which is not subjected to the low level square wave. Thus, the DC signal indicative of another identification content is outputted to the terminal 15.

For the ID being "H" indicative of the base band auxiliary signal, the ID removing circuit 14 is provided with a level converter circuit which converts the "H" level ID to an "L" level signal, so that the low level signal having no function as the base band auxiliary signal ID, is outputted to the terminal 15.

Accordingly, when the receiver 30 is the EDTV compatible receiver and is connected to the video signal processing system 1, it is possible to prevent an erroneous operation of the EDTV compatible receiver due to a supply of the ID with no base band auxiliary signal accompanied. Otherwise, the operation of the EDTV compatible receiver would be fooled under such circumstance.

In the described embodiment, the mute circuit 4 mutes the auxiliary signal periods dd11 and dd22 of the EDTV signal hh'. Alternatively, instead of muting the auxiliary signal periods dd11 and dd22, it is possible to replace them with a constant level luminance signal, a signal indicative of a constant color, an image corresponding to the picture signal cc stored in a memory, etc., or a display of date (that is, substantially muting the base band auxiliary signal). In these signals, periods corresponding to the DC reference level aa are rewritten in black level.

As described hereinbefore, the video signal processing system according to the present invention resides in a video signal processing system for performing a signal processing a video signal including an EDTV signal which contains a picture signal indicative of image information and an auxiliary signal related to and time-division multiplexed with the picture signal, comprising the auxiliary signal period detection circuit for outputting an auxiliary signal period signal obtained by detecting an auxiliary signal period related to a base band auxiliary signal from an EDTV signal including the base band auxiliary signal obtained by converting a frequency of the auxiliary signal into base band frequency and the mute circuit for substantially muting the EDTV signal including the base band auxiliary signal during the auxiliary signal period on the basis of the auxiliary signal detection signal. Therefore, it is possible to output an EDTV signal obtained by substantially removing the base band auxiliary signal when the EDTV signal containing the same is inputted, so that, in displaying an image on a screen of a conventional TV receiver connected to the present processing system, the upper and lower portions of the screen which correspond to the base band auxiliary signal become complete black, high lighting the center portion of the displayed image which is to be watched.

## Claims

1. A video signal processing system for processing various types of video signals including an EDTV signal containing a picture signal indicative of image information and an auxiliary signal related to the picture signal, the auxiliary signal being time-division multiplexed with the picture signal, comprising:
an auxiliary signal period detection means for outputting a detection signal by detecting a period of said auxiliary signal residing in a base-band frequency when said EDTV signal inputted to the video signal processing system contains said auxiliary signal being in the base-band frequency; and
muting means for muting said EDTV signal in said period of the auxiliary signal in the base-band frequency in response to said detection signal.
